# EUROPEAN PATENT SPECIFICATION

(11) **EP 0 977 672 B1**
(45) Date of publication and mention of the grant of the patent: **06.03.2002**
(21) Application number: 98919895.7
(22) Date of filing: 23.04.1998
(51) Int. Cl.: B44C 1/17

(54) **METHOD AND APPARATUS FOR APPLYING A MARKING FILM WITH PRESSURE-SENSITIVE ADHESIVE**
VERFAHREN UND VORRICHTUNG ZUM AUFBRINGEN EINER MARKIERUNG UNTER VERWENDUNG EINES DRUCKEMPFINDLICHEN KLEBSTOFF ENTHALTENDEN FILMS
PROCEDE ET DISPOSITIF PERMETTANT L'APPLICATION D'UN FILM A MARQUES POURVU D'UN ADHESIF AUTOCOLLANT

(30) Priority: 25.04.1997 JP 10950397
(43) Date of publication of application: 09.02.2000
(73) Proprietor: MINNESOTA MINING AND MANUFACTURING COMPANY, St. Paul, Minnesota 55133-3427 (US)
(72) Inventor: HIRATA, Makoto, Shizuoka (JP)
(74) Representative: Hilleringmann, Jochen, Dipl.-Ing.
(86) International application number: US9808362
(87) International publication number: WO9849017

(56) References cited:
- EP-A- 0 318 230
- EP-A- 0 529 806
- EP-A- 0 623 503
- FR-A- 2 540 441
- GB-A- 1 191 348

## Description

The present invention relates to a method and apparatus for the application of a marking film with a pressure-sensitive adhesive to a substrate having a three-dimensional surface.

Marking films are used in various fields such as automobile and motor-bicycle industries. However, the application of a marking film with a pressure-sensitive adhesive to a three-dimensional surface of, for example, a fuel tank is very difficult and troublesome. The following three methods are main conventional methods for the application of a marking film to a three-dimensional substrate. They have the following respective problems.

The first conventional method is to manually apply a marking film. The marking film is usually supplied as a laminate comprised of an application tape, a pressure-sensitive adhesive, a marking film, a pressure-sensitive adhesive, and a liner provided on top of one another in that order. The application tape functions as a support for transfer of a marking film to a substrate, and comprises a substrate, such as a PVC film, and laminated thereon a pressure-sensitive adhesive used in the marking film. The marking film is a urethane film having a desired shape or the like. The marking film has, laminated thereon, a pressure-sensitive adhesive for adhering the marking film to the substrate. The pressure-sensitive has thereon a liner for protecting the pressure-sensitive adhesive before use against dust or the like. In this method, the liner is first removed. An application tape is applied to a substrate, and the marking film in its edge is then applied to the substrate. The application tape in its edge side remaining unapplied is lifted up by one hand, while the application tape is carefully applied using a squeegee or the like by the other hand. After the application, the application tape is removed. This method suffers from a problem that, at the time of the application, the pressure-sensitive adhesive on the marking film unintentionally comes into contact with and is adhered to the substrate, or the application to a severe three-dimensional substrate unfavorably creates wrinkles in the marking film or causes entrainment of air between the substrate and the marking film, thus requiring a great deal of skill.

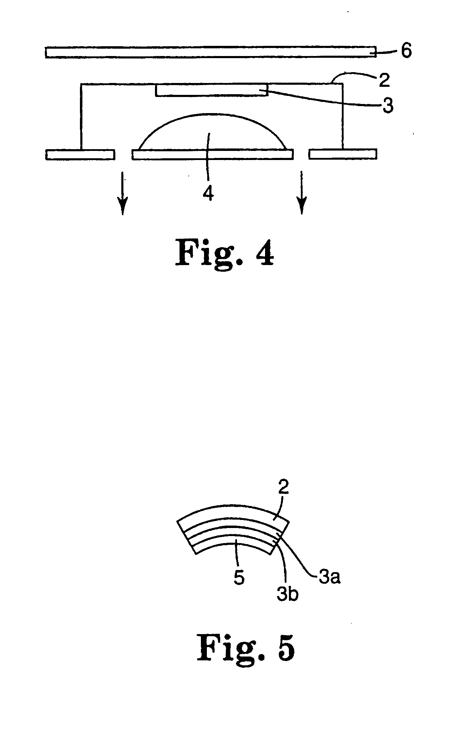

The second conventional method is to use a device for heat application under vacuum as shown in Fig. 4. A silicone rubber sheet is disposed on the top of the vacuum device. A laminate of a marking film and an application tape is provided below the silicone rubber sheet, and a substrate is disposed in a proper position below the laminate. In this case, a heat-activatable adhesive layer is provided on the surface of the marking film opposite to the surface in contact with the application tape. A port is introduced in a direction indicated by an arrow in the drawing to deaerate the interior of the vacuum device. At the same time, heating is performed by means of a heater, and the heat is diffused by the silicone rubber sheet to homogeneously heat-activate the adhesive, thereby adhering the marking film onto the substrate. This method can solve the above problems. It, however, requires large-scale equipment, resulting in large cost.

The third conventional method is to apply a vacuum-formed marking film in such a shape as will conform to the shape of the substrate as shown in Fig. 5. The marking film should be vacuum-formed by means of a male-female mold, resulting in increased production cost. Further, the mold should be replaced for each substrate. This is troublesome and increases the cost. Furthermore, the thermoforming makes it very difficult to attain complete conformability of the marking film to the shape of the substrate.

GB-A-1 191 348 discloses a method for the application of a marking film in the form of a label to a three-dimensional surface of a deformable substrate provided as a ball according to which the ball is flattened against the label, while the label is mounted on a flat platen, in order to transfer an image of the label onto the elastically deformable substrate.

It is the object of the present invention to provide a method and an apparatus for the application of a marking film which requires little or no skill and is simple and low in cost.

According to the invention this object is solved by a method and an apparatus as defined in claims 1 and 7, respectively. The subclaims relate to additional embodiments of the invention.

The disposing step of the method according to the invention can include the step of disposing the three-dimensional surface of the substrate inside a frame having a larger size than the substrate. The pressing step can include the step of pressing the application tape against the substrate to apply the marking film to the three-dimensional surface of die substrate by means of a tool, such as a squeegee.

The frame of the apparatus of the present invention can be of a size to allow all of the substrate therein. The apparatus can further comprise a tool, such as a squeegee, suitable for pressing said application tape against the substrate to apply said marking film to the three-dimensional surface of the substrate.

For either the method or the apparatus, the frame can have legs for locating the frame above the three-dimensional surface of the substrate, with each of the legs comprising an elastic body which renders the leg flexible and either stretchable, compressible or both. The elastic body can be a coil spring.

The invention will be described in more detail referring to the drawing in which:
Fig. 1 is a perspective view showing one embodiment of a device for practicing the method of the present invention,
Fig. 2 is a cross-sectional view showing one embodiment of the method of the present invention,
Fig. 3 is a cross-sectional view showing a laminate of application tape/marking film with pressure-sensitive adhesive,
Fig. 4 is a cross-sectional view showing a vacuum application device used in the conventional method, and
Fig. 5 is a cross-sectional view showing a laminate of application tape/marking film with pressure-sensitive adhesive which has been vacuum-formed according to the conventional method.

In the present invention, the frame is used for fixing an application tape. The attachment of the application tape to the frame can be achieved by taking advantage of adhesive force of the pressure-sensitive adhesive laminated on the application tape per se. In this case, the frame should have a contact area large enough to attach the application tape thereto. The frame may be made of any material which can attain the above object, for example, steel. The marking film with a pressure-sensitive adhesive is applied to a substrate by bringing the pressure-sensitive adhesive on the marking film into contact with the substrate to transfer the marking film from the application tape onto the substrate. Preferably, the frame has legs for supporting the frame, the substrate is fixed below the frame, and, upon the application of force to the application tape from the top of the frame by means of a tool, such as a squeegee, the application tape is stretched to permit the marking film to be applied onto the substrate. In the case of a severe three-dimensional substrate, the application of the marking film on the side surface of the substrate is difficult. In such a case, provision of an elastic body, for example, a spring, on the legs of the frame permits each leg to be flexed or stretched, enabling the angle of the surface of the frame, with an application tape put thereon, to the substrate to be changed. Therefore, a marking film can be easily applied also to the side face of the substrate by changing the angle of the surface of the application tape according to the three-dimensional surface of the substrate.

The application tape may be any tape commonly used in the art The extensibility of the application tape is so high that the marking film can be applied to a severe three-dimensional surface. Preferred is, for example, an application tape having an elongation at break of 150 to 400% as measured by the procedure set forth in JIS Z0237. Materials, for the application tape, usable herein include, for example, PVC, PE, PP, PE/PP, urethane rubber, and ionomer resins.

Preferably, the pressure-sensitive adhesive laminated onto the application tape has a lower adhesive force than the pressure-sensitive adhesive tape used in the marking film, and examples of such pressure-sensitive adhesives and synthetic rubber pressure-sensitive adhesives.

The marking film may be a conventional one, and examples thereof include those made of PVC, urethane, acrylic, ionomer resins and the like. The pressure-sensitive adhesive laminated on the marking film may be any conventional pressure-sensitive adhesive, and examples thereof include acrylic pressure-sensitive adhesives. The pressure-sensitive adhesive may have thereon a line for protecting the pressure-sensitive adhesive before use against dust or the like.

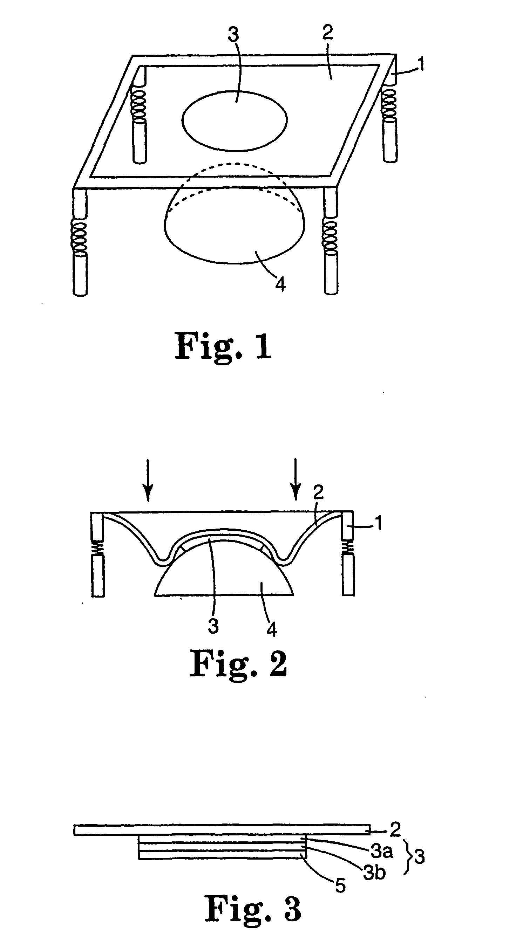

Fig. 1 is a perspective view showing an embodiment of a device for practicing the method according to the present invention. A frame with legs is provided. A marking film, with a pressure-sensitive adhesive, in its surface remote from the pressure-sensitive adhesive is adhered to a desired position, preferably the central position, of an application tape having a larger size than the frame by taking advantage of adhesive force of the application tape. The application tape is then provided under proper tension on the frame with legs and fixed thereto with the aid of the adhesive force of the application tape. Thereafter, a substrate is placed, below the frame with legs, in a proper position relative to the marking film. A liner provided on the pressure-sensitive adhesive layer in the marking tape is separated and removed, and the application tape is pressed downward as indicated by an arrow in Fig. 2 to permit the application of the marking film to the substrate to proceed from the upper part of the substrate toward the lower part of the substrate. Thus, a marking film can be easily applied to a three-dimensional surface. During the application, no wrinkle is created in the marking film because the application tape is spread under given tension. Heating the application tape and the marking film will further facilitate the application of the marking film to the substrate.

### Examples

An example of the present invention will be described.

A #331 PVC film, with an acrylic pressure-sensitive adhesive laminated thereon, manufactured by Sumitomo 3M was used as an application tape, and a PU295T urethane film, with an acrylic pressure-sensitive adhesive laminated thereon, manufactured by Sumitomo 3M was used as a marking film. The PVC application tape had an elongation at break of 300% as measured by the procedure set forth in JIS Z0237.

A rectangular steel frame, with four legs, having a size of 50 cm x 75 cm was provided. The width of the frame which comes into contact with the PVC application tape was 5 cm. Thereafter, the urethane marking film, with a pressure-sensitive adhesive, in its surface not having a pressure-sensitive adhesive layer was applied to the PVC tape, and the laminate per se was then fixed onto the frame so that the laminate in its surface having the urethane marking film faced downward. A tank of a motorcycle was placed below the frame, and the PVC application tape was pressed downward to transfer the marking film, with a pressure-sensitive adhesive, to the tank of a motorcycle. The urethane marking film could be satisfactorily applied to the tank of the motorcycle without creating any wrinkle.

## Claims

1. A method for the application of a marking, film to a three-dimensional surface of a substrate, comprising the step of
- disposing the three-dimensional surface of the substrate inside a frame (1) having an application tape (2) attached thereon, the application tape (2) holding a marking film (3) thereon, the marking film (3) having a pressure sensitive adhesive (3b) thereon,
**characterized by** the following steps
- providing an extensible application tape (2), and
- pressing the application tape (2) against the substrate so as to elongate the application tape (2) and apply the pressure sensitive adhesive (3b) of the marking film (3) to the three-dimensional surface of the substrate without deforming the three-dimensional surface.

2. The method according to claim 1, wherein the disposing step includes disposing the three-dimensional surface of the substrate inside a frame (1) having a larger size than the substrate and the periphery of the application tape (2) being secured by the frame (1) such that the application tape (2) located interior of the frame (1) is extensible so as to spread over a three-dimensional surface of the substrate during the pressing step.

3. The method according to claim 1, wherein said pressing step includes pressing the application tape (2) against the substrate to apply the marking film (3) to the three-dimensional surface of the substrate by means of a tool such as a squeegee.

4. The method according to claim 1, wherein the frame (1) has legs for locating the frame (1) above the three-dimensional surface of the substrate and each of the legs comprises an elastic body which renders the leg flexible and stretchable.

5. The method according to claim 1, wherein the frame (1) has legs for locating the frame (1) above the three-dimensional surface of the substrate and each of the legs comprises an elastic body which renders the leg flexible and compressible.

6. The method according to claims 4 and 5, wherein the elastic body is a coil spring.

7. An apparatus for applying a marking film to a three-dimensional surface or a substrate, said apparatus comprising
- a frame (1) dimensioned so as to allow a three-dimensional surface of a substrate to be disposed inside said frame (1), an application tape (2), and a marking film (3) having a pressure sensitive adhesive (3b) thereon,
- wherein said application tape (2) is attached to said frame (1) and holds said marking film (3) thereon,
**characterized in that**
- said application tape (2) is extensible so that, when the three-dimensional surface is inside said frame (1), said application tape (2) can be pressed against the substrate so as to elongate the application tape (2) and apply the pressure sensitive adhesive (3b) of said marking film (3) to the three-dimensional surface of the substrate without deforming the three-dimensional surface.

8. The apparatus according to claim 7, wherein said frame (1) is of a size to allow all of the substrate therein and the periphery of the application tape (2) is secured by the frame (1) such that the application tape (2) located interior of the frame (1) is extensible so as to spread over a three-dimensional surface of the substrate when the application tape (2) is pressed against the substrate.

9. The apparatus according to claim 7, further comprising a tool, such as a squeegee, suitable for pressing said application tape (2) against the substrate to apply said marking film (3) to the three-dimensional surface of the substrate.

10. The apparatus according to claim 7, wherein said frame (1) has legs for locating said frame (1) above the three-dimensional surface of the substrate and each of said legs comprises an elastic body which renders the leg flexible and stretchable.

11. The apparatus according to claim 7, wherein said frame (1) has legs for locating said frame (1) above the three-dimensional surface of the substrate and each of said legs comprises an elastic body which renders the leg flexible and compressible.

12. The apparatus according to claims 10 and 11, wherein said elastic body is a coil spring.

## Patentansprüche

1. Verfahren zum Aufbringen eines Markierungsfilms auf eine dreidimensionale Fläche eines Substrats, mit folgenden Schritten:
- Anordnen der dreidimensionalen Fläche des Substrats in einem Rahmen (1), der ein daran befestigtes Aufbringband (2) mit einem Markierungsfilm (3) aufweist, wobei der Markierungsfilm (3) mit einem druckempfindlichen Kleber (3b) versehen ist,
**gekennzeichnet durch** folgende Schritte:
- Bereitstellen eines dehnbaren Aufbringbands (2), und
- Andrücken des Aufbringbands (2) gegen das Substrat zwecks Längung des Aufbringbands (2) und Aufbringung des druckempfindlichen Klebers (3b) des Markierungsfilms (3) auf die dreidimensionale Fläche des Substrats ohne Verformung der dreidimensionalen Fläche.

2. Verfahren nach Anspruch 1, bei dem der Anordnungsschritt das Anordnen der dreidimensionalen Fläche des Substrats in einem Rahmen (1), der größer ist als das Substrat, umfasst, wobei der Umfang des Aufbringbands (2) derart an dem Rahmen (1) befestigt ist, dass das Aufbringband (2) in dem Rahmen (1) dehnbar ist und während des Andrückschritts über eine dreidimensionale Fläche des Substrats erstreckbar ist.

3. Verfahren nach Anspruch 1, bei dem der Andrückschritt das Andrücken des Anbringbands (2) gegen das Substrat zum Aufbringen des Markierungsfilms (3) auf die dreidimensionale Fläche des Substrats mittels eines Werkzeugs, wie z. B. einer Auftragwalze, umfasst.

4. Verfahren nach Anspruch 1, bei dem der Rahmen (1) Beine zum Platzieren des Rahmens (1) über der dreidimensionalen Fläche des Substrats aufweist und jedes Bein einen elastischen Körper aufweist, der das Bein flexibel und streckbar macht.

5. Verfahren nach Anspruch 1, bei dem der Rahmen (1) Beine zum Platzieren des Rahmens (1) über der dreidimensionalen Fläche des Substrats aufweist und jedes Bein einen elastischen Körper aufweist, der das Bein flexibel und zusammendrückbar macht.

6. Verfahren nach Anspruch 4 und 5, bei dem der elastische Körper eine Spiralfeder ist.

7. Vorrichtung zum Aufbringen eines Markierungsfilms auf eine dreidimensionale Fläche eines Substrats, mit:
- einem Rahmen (1), der derart dimensioniert ist, dass eine dreidimensionale Fläche eines Substrats in dem Rahmen (1) positionierbar ist, einem Aufbringband (2) und einem Markierungsfilm (3) mit einem darauf aufgebrachten Haftkleber (3b),
- wobei das Aufbringband (2) an dem Rahmen (1) befestigt ist und den Markierungsfilm (3) an dem Rahmen festhält,
**dadurch gekennzeichnet, dass**
- das Aufbringband (2) dehnbar ist, so dass, wenn sich die dreidimensionale Fläche in dem Rahmen (1) befindet, das Aufbringband (2) gegen das Substrat gedrückt werden kann, derart, dass das Aufbringband (2) gelängt wird und der Haftkleber (3b) des Markierungsfilms (3) auf die dreidimensionale Fläche des Substrats aufgebracht wird, ohne dass die dreidimensionale Fläche verformt wird.

8. Vorrichtung nach Anspruch 7, bei der der Rahmen (1) eine Größe aufweist, die das Aufnehmen des gesamten darin angeordneten Substrats ermöglicht, und der Umfangs des Aufbringbands (2) derart an dem Rahmen (1) befestigt ist, dass das in dem Rahmen (1) befindliche Aufbringband (2) dehnbar ist, so dass es sich über eine dreidimensionale Fläche des Substrats erstreckt, wenn das Aufbringband (2) gegen das Substrat gedrückt wird.

9. Vorrichtung nach Anspruch 7, ferner mit einem Werkzeug, wie z. B. einer Auftragwalze, zum Andrücken des Aufbringbands (2) gegen das Substrat zum Aufbringen des Markierungsfilms (3) auf die dreidimensionale Fläche des Substrats.

10. Vorrichtung nach Anspruch 7, bei der der Rahmen (1) Beine zum Platzieren des Rahmens (1) über der dreidimensionalen Fläche des Substrats aufweist und jedes Bein einen elastischen Körper aufweist, der das Bein flexibel und streckbar macht.

11. Vorrichtung nach Anspruch 7, bei der der Rahmen (1) Beine zum Platzieren des Rahmens (1) über der dreidimensionalen Fläche des Substrats aufweist und jedes Bein einen elastischen Körper aufweist, der das Bein flexibel und zusammendrückbar macht.

12. Vorrichtung nach Anspruch 10 und 11, bei der der elastische Körper eine Spiralfeder ist.

## Revendications

1. Procédé pour l'application d'un film de marquage sur une surface tridimensionnelle d'un substrat, comprenant les étapes consistant à :
- disposer la surface tridimensionnelle du substrat à l'intérieur d'un cadre (1) sur lequel est fixée une bande d'application (2), la bande d'application (2) portant sur elle un film de marquage (3), le film de marquage (3) ayant sur lui un auto-adhésif (3b),
**caractérisé par** les étapes suivantes consistant à :
- fournir une bande d'application extensible (2) ; et
- presser la bande d'application (2) contre le substrat de façon à étirer la bande d'application (2) et à appliquer l'auto-adhésif (3b) du film de marquage (3) sur la surface tridimensionnelle du substrat sans déformer la surface tridimensionnelle.

2. Procédé selon la revendication 1, dans lequel l'étape de disposition consiste à disposer la surface tridimensionnelle du substrat à l'intérieur d'un cadre (1) ayant une taille plus grande que le substrat et la périphérie de la bande d'application (2) étant fixée par le cadre (1), de sorte que la bande d'application (2) située à l'intérieur du cadre (1) soit extensible de façon à s'étaler sur une surface tridimensionnelle du substrat pendant l'étape de pression.

3. Procédé selon la revendication 1, dans lequel ladite étape de pression consiste à presser la bande d'application (2) contre le substrat pour appliquer le film de marquage (3) sur la surface tridimensionnelle du substrat à l'aide d'un outil tel qu'une raclette.

4. Procédé selon la revendication 1, dans lequel le cadre (1) possède des pieds pour positionner le cadre (1) au-dessus de la surface tridimensionnelle du substrat et chacun des pieds comprend un corps élastique qui rend le pied flexible et étirable.

5. Procédé selon la revendication 1, dans lequel le cadre (1) possède des pieds pour positionner le cadre (1) au-dessus de la surface tridimensionnelle du substrat et chacun des pieds comprend un corps élastique qui rend le pied flexible et compressible.

6. Procédé selon les revendications 4 et 5, dans lequel le corps élastique est un ressort hélicoïdal.

7. Appareil pour appliquer un film de marquage sur une surface tridimensionnelle ou sur un substrat, ledit appareil comprenant :
- un cadre (1) dimensionné de façon à permettre à une surface tridimensionnelle d'un substrat d'être disposée à l'intérieur dudit cadre (1), une bande d'application (2) et un film de marquage (3) ayant sur lui un auto-adhésif (3b),
- dans lequel ladite bande d'application (2) est fixée audit cadre (1) et porte sur elle ledit film de marquage (3),
**caractérisé en ce que**
- ladite bande d'application (2) est extensible de sorte que, quand la surface tridimensionnelle est à l'intérieur dudit cadre (1), ladite bande d'application (2) peut être pressée contre le substrat de façon à allonger la bande d'application (2) et à appliquer l'auto-adhésif (3b) dudit film de marquage (3) sur la surface tridimensionnelle du substrat sans déformer la surface tridimensionnelle.

8. Appareil selon la revendication 7, dans lequel ledit cadre (1) est d'une taille permettant de contenir tout le substrat à l'intérieur de celui-ci et la périphérie de la bande d'application (2) est fixée par le cadre (1) de sorte que la bande d'application (2) située à l'intérieur du cadre (1) est extensible de façon à s'étaler sur une surface tridimensionnelle du substrat quand la bande d'application (2) est pressée contre le substrat.

9. Appareil selon la revendication 7, comprenant de plus un outil, tel qu'une raclette, approprié pour presser ladite bande d'application (2) contre le substrat, pour appliquer ledit film de marquage (3) sur la surface tridimensionnelle du substrat.

10. Appareil selon la revendication 7, dans lequel ledit cadre (1) possède des pieds pour positionner ledit cadre (1) au-dessus de la surface tridimensionnelle du substrat et chacun desdits pieds comprend un corps élastique qui rend le pied flexible et étirable.

11. Appareil selon la revendication 7, dans lequel ledit cadre (1) possède des pieds pour positionner ledit cadre (1) au-dessus de la surface tridimensionnelle du substrat et chacun desdits pieds comprend un corps élastique qui rend le pied flexible et compressible.

12. Appareil selon les revendications 10 et 11, dans lequel ledit corps élastique est un ressort hélicoïdal.
